# EUROPÄISCHE PATENTSCHRIFT

(11) **EP 2 392 434 B1**
(45) Veröffentlichungstag und Bekanntmachung des Hinweises auf die Patenterteilung: **07.04.2021**
(21) Anmeldenummer: 11003532.6
(22) Anmeldetag: 29.04.2011
(51) Int. Cl.: B25J 9/16

(54) **Robotersteuerung**
Robot control
Commande de robot

(30) Priorität: 07.06.2010 DE 102010022931
(43) Veröffentlichungstag der Anmeldung: 07.12.2011
(73) Patentinhaber: KUKA Deutschland GmbH, 86165 Augsburg (DE)
(72) Erfinder: Bonin, Uwe, 86316 Friedberg (DE)
(74) Vertreter: Schlotter, Alexander Carolus Paul

(56) Entgegenhaltungen:
- EP-A1- 2 289 672
- EP-A2- 1 267 234
- WO-A1-2009/155947
- DE-A1- 10 314 025

## Beschreibung

Die vorliegende Erfindung betrifft ein Verfahren und eine Steuerung zum Steuern eines Roboters, wobei die Steuerung Sicherheitsinformationen über eine Netzwerk-Datenverbindung empfängt.

Roboter können im Betrieb, beispielsweise durch Programmierfehler, Ausfall oder Fehlfunktion ihrer Steuerung, aber auch durch unvorhergesehene Umweltbedingungen, beispielsweise eine Person, die in die Bewegungsbahn des Roboters tritt, sich und ihre Umwelt, insbesondere Personen, gefährden. Daher sind in ihrer Steuerung Sicherheitsfunktionen implementiert, die beispielsweise einen Automatikbetrieb des Roboters mit hohen Verfahrgeschwindigkeiten nur zulassen, wenn Schutztüren geschlossen und keine Not-Aus-Schalter betätigt sind.

In Automatisierungsanlagen werden Roboter heute oft, beispielsweise von einer zentralen Anlagen-SPS, über Netzwerk-Datenverbindungen angesteuert, etwa über PROFIBUS, PROFINET oder Ethernet. Aus Sicherheitsgründen wurden die Sicherheitsfunktionen bisher meist nicht durch diese Netzwerk-Datenverbindungen implementiert, sondern separat durch festverdrahtete Relais, Schütze und dergleichen. Doch sichere Netzwerk-Datenverbindungen wie beispielsweise PROFISAFE ermöglichen nunmehr auch die Integration von Sicherheitsfunktionen.

Dabei stellt sich jedoch das Problem, dass Sicherheitsinformationen, etwa der Zustand von Schutztüren, Not-Aus-Schaltern und dergleichen, in der Robotersteuerung nicht verfügbar sind, solange die Netzwerk-Datenverbindung nicht etabliert ist. Insbesondere kann also eine Robotersteuerung, in der ein Sicherheitsmittel eine Aktuierung des Roboters nur zulässt, wenn Freigaben von Schutztüren, Not-Aus-Schaltern und dergleichen vorliegen, nicht in Betrieb genommen werden, solange die Netzwerk-Datenverbindung nicht etabliert, insbesondere der Roboter nicht mit dieser verbunden ist. Doch auch wenn beispielsweise Anlagen-SPS und Robotersteuerung bereits über eine Netzwerk-Datenverbindung miteinander verbunden, vorgesehene Schutztüren, Not-Aus-Schaltern oder dergleichen in diese jedoch noch nicht eingebunden sind, kann nicht ohne weiteres die Anlagen-SPS die fehlenden Sicherheitsinformationen dieser Sicherheitseinrichtungen simulieren, da dann vor Ort eine Gefährdung beispielsweise des den Roboter in Betrieb nehmenden Bedieners nicht ausgeschlossen werden kann. Die DE 103 14 025 A1 betrifft ein Verfahren und eine Vorrichtung zum Steuern einer Mehrzahl von Handhabungsgeräten. Ziel ist es, ein System zum Steuern mehrerer Roboter bereitzustellen, durch welches ein Bedienen einer beliebigen Anzahl von Robotern ermöglicht wird, wobei diese Anzeige unabhängig von Fähigkeiten der einzelnen Steuerungseinheiten sein soll und wobei zugleich ein koordiniertes Bewegen mehrere Handhabungsgeräte, wie auch ein gezieltes Beeinflussen einzelner Handhabungsgeräte, möglich sein soll.

Die EP 2 289 672 A1 betrifft eine Anordnung und ein Verfahren zur sicheren Steuerung eines Manipulators. Ziel ist es, eine sichere Steuerung eines Manipulators zu verbessern. Es wird offenbart, die Sicherheits- und die Steuerungsfunktionalität zu trennen. Dadurch kann einerseits zum manuellen Steuern des Manipulators einer Bedieneinrichtung eine niedrigen Sicherheitsstufe verwendet werden und andererseits zur Gewährleistung einer Sicherheitsfunktionalität eine Schutzeinrichtung mit einer höheren Sicherheitsstufe genutzt werden.

Die EP 1 267 234 A2 betrifft ein Verfahren zur Überwachung einer technischen Anlage, insbesondere eines Handhabungsgerätes, sowie ein Überwachungs- und Steuergerät. Ziel ist es, eine Sicherheit einer Überwachung von Bewegungsabläufen einer technischen Anlage zu erhöhen, wobei insbesondere ein definierter Punkt einer Einrichtung der technischen Anlage im kartesischen Raum zu überwachen ist.

Die WO 2009/155947 A1 betrifft ein Steuerungssystem und ein Verfahren zur Steuerung für einen Roboter. Ziel ist es, ein Steuerungssystem für einen Roboter bereitzustellen, welches für autonome Operationen eines Roboters sowie Kooperationen eines Roboters mit einem Menschen geeignet ist. Dazu wird vorgeschlagen, zur Sicherheitssteuerung Daten betreffend eine Distanz einer Person zum Roboter zu kommunizieren, wobei diese Information dazu genutzt wird, den Pfad des Roboters so anzupassen, dass eine Sicherheit für die Person garantiert werden kann.

Aufgabe der vorliegenden Erfindung ist es, den Betrieb, insbesondere die Inbetriebnahme, eines Roboters zu verbessern.

Diese Aufgabe wird durch eine Steuerung mit den Merkmalen des Anspruchs 1 gelöst. Anspruch 9 stellt eine Automatisierungsanlage mit einer solchen Steuerung, Anspruch 10 ein Verfahren zum Steuern, insbesondere zum Inbetriebnehmen, eines Roboters mittels einer erfindungsgemäßen Steuerung, und Anspruch 11 ein entsprechendes Computerprogrammprodukt unter Schutz. Die Unteransprüche betreffen vorteilhafte Weiterbildungen.

Nach einem Aspekt der vorliegenden Erfindung wird eine Robotersteuerung mit einer wahlweisen Deaktivierung bzw. Muting-Funktion wenigstens einiger ihrer Sicherheitsfunktionen vorgeschlagen. Indem der Bediener wahlweise mittels eines Deaktivierungsmittels der Robotersteuerung ausgesuchte Sicherheitsfunktionen deaktiviert, kann er insbesondere auch ohne vollständig etablierte Netzwerk-Datenverbindung, den Roboter betreiben, beispielsweise manuell und/oder mit reduzierter Geschwindigkeit verfahren, um ihn in Betrieb zu nehmen.

Allgemein umfasst eine erfindungsgemäße Steuerung für einen oder mehrere Roboter, insbesondere Industrieroboter einer Automatisierungsanlage, ein Empfangsmittel zum Empfangen von Sicherheitsinformationen über eine Netzwerk-Datenverbindung. Eine Netzwerk-Datenverbindung kann insbesondere wenigstens einen Feldbus, etwa PROFIBUS, PROFINET, EtherCAT, oder EtherNet umfassen. Vorzugsweise handelt es sich um eine sichere Netzwerk-Datenverbindung, insbesondere PROFISAFE, etwa gemäß IEC 61784-3-3, die zur Implementierung von Sicherheitsfunktionen geeignet ist.

Weiterhin umfasst eine erfindungsgemäße Steuerung ein Sicherheitsmittel zum Ausführen einer oder mehrerer Sicherheitsfunktionen auf Basis einer oder mehrerer empfangener Sicherheitsinformationen.

Sicherheitsinformationen im Sinne der vorliegenden Erfindung können insbesondere von einem Zustand einer Sicherheitseinrichtung wie zum Beispiel einem Not-Halt-Sensor bzw. -Schalter, einer Raumüberwachung und/oder einer Roboterzustandsüberwachung abhängen, insbesondere diesen Zustand beschreiben bzw. angeben. So kann beispielsweise eine Sicherheitsinformation den Zustand eines Not-Aus-Schalters ("betätigt" oder "nicht betätigt" bzw. "nicht betätigt, aber bereit") und/oder den Zustand einer Arbeits- oder Schutzraumüberwachung (zum Beispiel "verletzt" oder "nicht verletzt" bzw. "nicht verletzt, aber überwacht") abbilden, die beispielsweise durch die Überwachung von Schutztüren, Lichtvorhängen und/oder die, beispielsweise induktive oder optische, Überwachung von Räumen implementiert sein kann. Zusätzlich oder alternativ kann eine Sicherheitsinformation beispielsweise den Zustand einer Roboterzustandsüberwachung abbilden, etwa, ob ein Roboter sich mit zulässiger Geschwindigkeit und/oder Beschleunigung bewegt, insbesondere stillsteht, ob auf ihn wirkende Kräfte und Momente Grenzwerte überschreiten oder dergleichen.

Das Empfangsmittel kann beispielsweise über die Netzwerk-Datenverbindung direkt von den Sicherheitseinrichtungen gesendete Sicherheitsinformationen empfangen. Gleichermaßen kann es auch Sicherheitsinformationen von einer Einrichtung, insbesondere einer Anlagensteuerung, empfangen, die diese auf Basis von Signalen von Sicherheitseinrichtungen über die Netzwerk-Datenverbindung an die Robotersteuerung überträgt. So kann beispielsweise das Sicherheitsmittel der Robotersteuerung eine Bewegung des Roboters zulassen, wenn Freigabesignale von vorgesehenen Sicherheitseinrichtungen, etwa Not-Aus-Schaltern, Schutztürüberwachungen oder dergleichen vorliegen bzw. keine Stopsignale von diesen vorliegen. Gleichermaßen kann die Anlagensteuerung nach Erhalt entsprechender Signale ein Freigabesignal bzw. Stopsignal über die Netzwerk-Datenverbindung übertragen, das vom Empfangsmittel empfangen wird und auf das das Sicherheitsmittel reagiert.

Allgemein kann eine Sicherheitsfunktion im Sinne der vorliegenden Erfindung einen Roboterzustand oder Roboterbetrieb auf Basis wenigstens einer Sicherheitsinformation zulassen oder verhindern. So kann beispielsweise eine Sicherheitsfunktion eine Bewegung des Roboters verhindern, wenn kein Freigabesignal einer Raum- oder Roboterzustandsüberwachung vorliegt oder wenn ein Stopsignal eines Not-Aus-Sensors vorliegt, bzw. nur zulassen, wenn ein Freigabesignal einer Raum- oder Roboterzustandsüberwachung vorliegt oder wenn kein Stopsignal eines Not-Aus-Sensors vorliegt.

Erfindungsgemäß ist nun ein Deaktivierungsmittel zum Deaktivieren einer oder mehrerer Sicherheitsfunktionen, die durch das Sicherheitsmittel ausgeführt werden, vorgesehen. Ein Deaktivieren einer Sicherheitsfunktion im Sinne der vorliegenden Erfindung kann insbesondere einen Roboterzustand oder Roboterbetrieb trotz einer oder mehrerer Sicherheitsinformationen zulassen oder verhindern. So kann beispielsweise bei Deaktivierung der entsprechenden Sicherheitsfunktion ein Roboter verfahren, obwohl kein Freigabesignal von einem Not-Aus-Sensor oder einer Schutztürüberwachung vorliegt. Auf diese Weise kann auch bei noch nicht etablierter Netzwerk-Datenverbindung ein Roboter durch die Robotersteuerung aktuiert und so insbesondere ein Roboter einer Automatisierungsanlage in Betrieb genommen werden.

In einer bevorzugten Ausführung der vorliegenden Erfindung wird eine Sicherheitsfunktion dadurch deaktiviert, dass ein Simulationsmittel eine oder mehrere über die Netzwerk-Datenverbindung empfangene Sicherheitsinformationen simuliert. Auf diese Weise kann die übrige Robotersteuerung, insbesondere das Sicherheitsmittel, unverändert betrieben werden. Das Simulationsmittel kann beispielsweise entsprechende Daten im Empfangsmittel überschreiben oder statt dem Empfangsmittel Daten an das Sicherheitsmittel übertragen. Gleichermaßen kann das Deaktivierungsmittel anstelle des Sicherheitsmittels eine Freigabe erteilen bzw. eine durch das Sicherheitsmittel aktivierte Beschränkung aufheben oder jedenfalls modifizieren.

Um bei deaktivierter Sicherheitsfunktion bzw. deaktivierten Sicherheitsfunktionen die Sicherheit zu gewährleisten, werden in einer bevorzugten Ausführung durch Deaktivieren einer oder mehrerer Sicherheitsfunktionen automatisch ein oder mehrere Betriebmodi ausgewählt, die in diesem Fall zugelassen bzw. nicht mehr zugelassen sind. So kann beispielsweise bei Deaktivierung einer Sicherheitsfunktion, die eine Roboterbewegung bei geöffneter Schutztür verhindert, ein automatischer Betrieb, in dem ein Roboter sich gemäß eines vorgegebenen Programms mit hoher Geschwindigkeit bewegt, als nicht mehr zugelassen ausgewählt werden. Gleichermaßen kann ein manueller Betrieb, in dem ein Roboter vom Bediener direkt gesteuert wird, und/oder ein Testbetrieb, in dem ein Bediener das Abarbeiten eines vorgegebenen Programms, zum Beispiel schrittweise, steuert, als zugelassen ausgewählt werden. In einer bevorzugten Ausführung wird ein Betrieb mit reduzierter Robotergeschwindigkeit und/oder reduziertem bzw. eingeschränktem Arbeitsraum als zugelassen ausgewählt, wenn eine oder mehrere Sicherheitsfunktionen deaktiviert werden.

Vorzugsweise können verschiedene Sicherheitsfunktionen, etwa die Abhängigkeit einer Roboterbewegung einerseits vom Zustand eines Not-Aus-Sensors und andererseits vom Zustand einer Schutztür, selektiv deaktiviert werden. Dann können auch je nach deaktivierter Sicherheitsfunktion unterschiedliche Betriebsmodi zugelassen bzw. nicht zugelassen werden. Beispielsweise kann bei deaktivierter Schutztüren-Sicherheitsfunktion ein kontinuierliches Abfahren eines vorgegebenen Programms im Testbetrieb mit reduzierter Geschwindigkeit, bei deaktivierter Not-Aus-Sensor-Sicherheitsfunktion nur noch ein manuelles, schrittweises Verfahren zugelassen sein.

In einer bevorzugten Ausführung weist die Steuerung ein, insbesondere tragbares, Eingabemittel bzw. Handgerät zum Steuern des Roboters auf. Dieses kann beispielsweise direkt oder über die Netztwerk-Datenverbindung mit der Robotersteuerung verbunden sein und weist vorzugsweise eine Sicherheitseinrichtung, insbesondere einen Zustimmsensor bzw. -schalter, auf.

Vorzugsweise sind eine oder mehrere Sicherheitsfunktionen durch das Deaktivierungsmittel nicht deaktivierbar. So kann insbesondere vorgesehen sein, dass eine Sicherheitsfunktion, die eine Aktuierung des Roboters nur bei betätigtem Zustimmsensor eines Handbediengerätes zulässt, nicht deaktivierbar ist. Auf diese Weise kann auch bei deaktivierten netztwerk-gebundenen Sicherheitsfunktionen weiterhin die Sicherheit einer Bedienperson gewährleistet sein.

Eine Steuerung und/oder ein Mittel im Sinne der vorliegenden Erfindung, insbesondere ein Empfangs-, Sicherheits-, Deaktivierungs-, Simulations-, Auswahl- oder Eingabemittel, kann durch eine oder mehrere Komponenten hard- und/oder softwaretechnisch realisiert sein. So kann beispielsweise eine Robotersteuerung eine mehrere Hardware-Komponenten, insbesondere Mikrocontroller, Recheneinheiten (CPUs), Speicher und dergleichen, und/oder ein oder mehrere vorgegebene Arbeitsprogramme für einen oder mehrere Roboter aufweisen. Ein Deaktivierungsmittel kann zum Beispiel durch ein Software-Modul und/oder durch eine separate Hardwarekomponente implementiert sein.

Entsprechend kann das Deaktivierungsmittel beispielsweise über eine Eingabe an die Robotersteuerung betätigt werden.

Eine Netzwerk-Datenverbindung kann, wenigstens teilweise, leitungsgebunden und/oder, wenigstens teilweise, drahtlos, sein, insbesondere mittels Funk Daten übertragen.

Weitere Vorteile und Merkmale ergeben sich aus den Unteransprüchen und den Ausführungsbeispielen. Hierzu zeigt, teilweise schematisiert, die einzige:

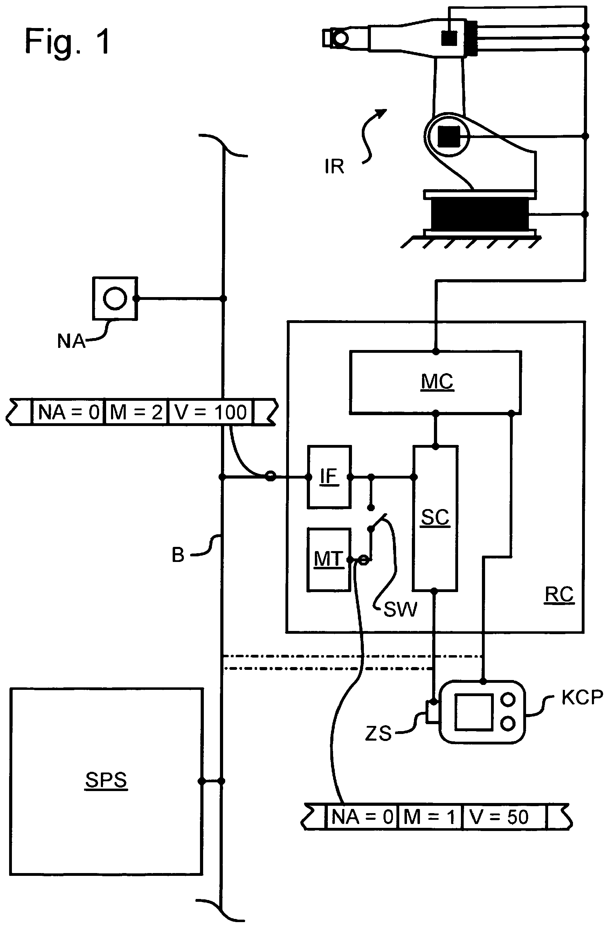

Fig. 1: einen Teil einer Automatisierungsanlage mit einer Robotersteuerung nach einer Ausführung der vorliegenden Erfindung.

Fig. 1 zeigt eine speicherprogrammierbare Anlagensteuerung SPS zur Steuerung einer Automatisierungsanlage mit mehreren Industrierobotern IR, von denen der besseren Übersichtlichkeit halber nur einer dargestellt ist.

Dessen Motoren sind mit einer Bewegungssteuerung MC einer Robotersteuerung RC verbunden, die beispielsweise in einem Steuerschrank oder auf einem PC, insbesondere Industrie-PC, integriert sein kann.

Die Robotersteuerung RC weist eine Bus-Schnittstelle IF zum Empfangen und Senden von Daten über einen PROFISAFE-Bus B auf, über den auch die Anlagensteuerung SPS Daten sendet und empfängt. Beispielsweise sendet die SPS einen Startbefehl zum Abarbeiten eines in der Robotersteuerung RC gespeicherten Arbeitsprogramms über den Bus B an die Robotersteuerung RC und empfängt über diesen von ihr Rückmeldungen, etwa über den Zustand, beispielsweise die Pose, des Roboters IR.

Ebenfalls in den PROFISAFE-Bus B sind Sicherheitseinrichtungen eingebunden, etwa Kameras zur optischen Überwachung eines zulässigen Arbeitsraums bzw. verbotenen Schutzraums des Roboters IR, Lichtvorhänge oder Schutztürschalter, sowie ein exemplarisch dargestellter Not-Aus-Schalter NA.

Im normalen bzw. Automatikbetrieb werden über den Bus B Daten übertragen, die ausschnittsweise in Fig. 1 angedeutet sind. Dabei bedeutet das Datum "NA = 0", dass der bzw. alle Not-Aus-Schalter angeschlossen und betriebsbereit, jedoch nicht betätigt sind. "M = 2" zeigt an, dass der Automatikbetrieb zugelassen ist. "V = 100" gibt dabei an, dass mit 100% einer vorgegebenen Geschwindigkeit gefahren werden darf.

Die Bus-Schnittstelle IF empfängt unter anderem diese Daten und bildet somit ein Empfangsmittel im Sinne der vorliegenden Erfindung. Ein Sicherheitsmittel SC, beispielsweise ein entsprechendes Programm oder ein entsprechender Mikrocontroller, wertet die Daten aus und lässt ein Abfahren eines vorgegebenen Arbeitsprogramms mit der vollen dafür vorgegebenen Geschwindigkeit durch die Bewegungssteuerung MC nur zu, wenn unter anderem die Sicherheitsinformation "NA = 0" ("kein Not-Aus betätigt") empfangen wird. Somit führt es eine Not-Aus-Schalter-Sicherheitsfunktion aus.

Weiterhin ist ein Handgerät KCP zum Steuern des Roboters IR mit dessen Steuerung RC verbunden, über das Steuerbefehle, beispielsweise direkte Steuerbefehle für einzelne Motoren in einem manuellen Modus, oder ein schrittweises Anfahren abgespeicherter Posen in einem Testbetrieb, an die Bewegungssteuerung MC übertragen werden können. Ein Zustimmschalter ZS des Handgeräts KCP ist direkt mit dem Sicherheitsmittel SC verbunden, das eine Zustimmschalter-Sicherheitsfunktion ausführt, die eine Steuerung des Roboters über das Handgerät nur bei betätigtem Zustimmschalter ZS zulässt. Wie in Fig. 1 strichpunktiert angedeutet, kann das Handgerät KCP und/oder sein Zustimmschalter auch über die Netzwerk-Datenverbindung B mit der Robotersteuerung RC verbunden sein.

Ist die Netzwerk-Datenverbindung B nicht vollständig etabliert, weil beispielsweise die Robotersteuerung RC, der Not-Aus-Schalter NA oder die Anlagen-SPS nicht eingebunden sind, verhindert normalerweise das Sicherheitsmittel SC jegliche Aktuierung des Roboters IR, da vorgesehene netzwerkgebundene Sicherheitsinformationen wie der Zustand des Not-Aus-Schalters NA nicht vorliegen. Somit wäre auch keine Inbetriebnahme des Roboters IR durch manuelles Steuern bzw. einen Testbetrieb vorgegebener Programme möglich, obwohl dies durch manuelle Steuerung des Roboters IR vor Ort durch das Handgerät KCP auch ohne Berücksichtigung des weit außerhalb des Arbeitsbereichs des Roboters angeordneten Not-Aus-Schalters NA gefahrlos möglich wäre.

Daher ist erfindungsgemäß ein Deaktivierungsmittel vorgesehen, das ein Simulationsmittel MT und ein Auswahlmittel SW aufweist.

Das Simulationsmittel MT simuliert, wie in Fig. 1 angedeutet, die normalerweise über die Netzwerk-Datenverbindung B empfangenen Sicherheitsinformation "NA = 0" ("kein Not-Aus betätigt"), wenn es über das Auswahlmittel SW aktiviert wird, indem es einen entsprechenden Datensatz im Empfangsmittel IF überschreibt oder statt diesem an das Sicherheitsmittel SC überträgt.

Wie in Fig. 1 angedeutet, umfasst der simulierte Datensatz zudem die Information "M = 1", d.h., es sind nur manueller und Testbetrieb, also eine Steuerung über das Handgerät KCP, zulässig, nicht jedoch ein von der SPS aktivierter Automatikbetrieb ("M = 2"). Dabei wird automatisch nur mit 50% der vorgegebenen Geschwindigkeit verfahren ("V = 50").

Wenn also das Deaktivierungsmittel aktiviert, i.e. in Fig. 1 der Schalter SW geschlossen ist, erhält das Sicherheitsmittel SC unabhängig davon, welche Informationen das Empfangsmittel IF aus dem Bus B erhält, die simulierten Daten "NA = 0", "M = 1" und "V = 50". Somit ist seine Not-Aus-Sicherheitsfunktion deaktiviert, da es auch ohne Freigabe vom Not-Aus-Schalter NA ein Verfahren des Roboters IR zulässt. Gleichermaßen ist automatisch der Betriebsmodus "Automatikbetrieb" ("M = 2") als derzeit nicht zugelassen bzw. der manuelle und der Testbetrieb ("M = 1") als derzeit ausschließlich zugelassen ausgewählt, wobei darin nur mit reduzierter Robotergeschwindigkeit verfahren werden kann ("V = 50").

Die Zustimmschalter-Sicherheitsfunktion kann hingegen durch das Deaktivierungsmittel nicht deaktiviert werden, da das Sicherheitsmittel SC im manuellen und Testbetrieb weiterhin die Sicherheitsinformation vom Zustimmschalter ZS fordert, um den Roboter IR zu verfahren. Dies ist auch bei der strichpunktiert angedeuteten Variante möglich, indem das Simulationsmittel MT das entsprechende Datum (etwa "ZS = 1") nicht simuliert, so dass das Sicherheitsmittel SC dieses unverändert über den Bus B vom Zustimmschalter ZS erhält. Ein weiteres Beispiel einer auch durch das Deaktivierungsmittel bei Inbetriebnahme nicht deaktivierbaren Sicherheitsfunktion ist eine Roboterzustandsüberwachung, bei der das Sicherheitsmittel SC von der Bewegungssteuerung MC die Posen, Geschwindigkeiten und/oder Beschleunigungen des Roboters IR erhält, mit Grenzwerten vergleicht, und bei Überschreiten der Grenzwerte einen Stop, beispielsweise einen STOP 0, STOP 1 oder STOP 2, auslöst.

Würde hingegen bei deaktivierter Sicherheitsfunktion, d.h. geschlossenem Schalter SW (der vorzugsweise durch eine Eingabe in einem Programm der Robotersteuerung implementiert sein kann), etwa über das Handgerät KCP der Automatikbetrieb gewählt, wird dieser durch das Sicherheitsmittel SC gesperrt, da das Deaktivierungsmittel MT unter anderem die Anweisung "M = 1" simuliert und so den Modus "Automatikbetrieb" ("M = 2") als nicht zulässig ausgewählt hat.

### Bezugszeichenliste

- IR: (Industrie)Roboter
- NA: Not-Aus-Schalter bzw. -sensor
- MC: Bewegungssteuerung
- IF: Bus-Schnittstelle (Empfangsmittel)
- MT: Simulationsmittel (Deaktivierungsmittel)
- SC: Sicherheitsmittel
- SW: Auswahlmittel (Deaktivierungsmittel)
- RC: Robotersteuerung
- KCP: Handeingabegerät
- ZS: Zustimmschalter bzw. -sensor
- SPS: speicherprogrammierbare Anlagensteuerung

## Patentansprüche

1. Steuerung (RC) für einen Roboter (IR), mit einem Empfangsmittel (IF) zum Empfangen von Sicherheitsinformationen über eine Netzwerk-Datenverbindung (B), einem Sicherheitsmittel (SC) zum Ausführen wenigstens einer Sicherheitsfunktion auf Basis wenigstens einer empfangenen Sicherheitsinformation, und einem Deaktivierungsmittel (MT, SW) zum Deaktivieren wenigstens einer dieser Sicherheitsfunktionen, **dadurch gekennzeichnet, dass** das Deaktivierungsmittel so ausgebildet ist, dass es zum Deaktivieren wenigstens einer Sicherheitsfunktion ein Simulationsmittel (MT) zum Simulieren wenigstens einer über die Netzwerk-Datenverbindung empfangbaren Sicherheitsinformation aufweist.

2. Steuerung nach Anspruch 1, **dadurch gekennzeichnet, dass** das Deaktivierungsmittel ein Auswahlmittel (SW) zur Auswahl wenigstens eines Betriebmodus durch Deaktivieren einer Sicherheitsfunktion aufweist.

3. Steuerung nach Anspruch 2, **dadurch gekennzeichnet, dass** ein durch das Auswahlmittel auswählbarer Betriebmodus einen automatischer Betrieb oder einen manuellen und/oder Testbetrieb insbesondere einen Betrieb mit reduzierter Robotergeschwindigkeit und/oder mit reduziertem Arbeitsraum, umfasst.

4. Steuerung nach einem der vorhergehenden Ansprüche, **dadurch gekennzeichnet, dass** eine Sicherheitsinformation von einem Zustand einer Sicherheitseinrichtung, insbesondere eines Not-Halt-Sensors (NA), einer Raumüberwachung und/oder einer Roboterzustandsüberwachung abhängt.

5. Steuerung nach einem der vorhergehenden Ansprüche, **dadurch gekennzeichnet, dass** eine Sicherheitsfunktion einen Roboterzustand oder Roboterbetrieb auf Basis wenigstens einer Sicherheitsinformation zulässt oder verhindert.

6. Steuerung nach einem der vorhergehenden Ansprüche, **gekennzeichnet durch** ein, insbesondere tragbares, Eingabemittel (KCP) zum Steuern des Roboters.

7. Steuerung nach Anspruch 6, **dadurch gekennzeichnet, dass** das Eingabemittel eine Sicherheitseinrichtung, insbesondere einen Zustimmsensor (ZS), aufweist.

8. Steuerung nach einem der vorhergehenden Ansprüche, **dadurch gekennzeichnet, dass** wenigstens eine Sicherheitsfunktion durch das Deaktivierungsmittel nicht deaktivierbar ist.

9. Automatisierungsanlage mit einer Anlagensteuerung (SPS), wenigstens einer Robotersteuerung (RC) und einer Netzwerk-Datenverbindung (B) zum Übertragen von Sicherheitsinformationen zu der Robotersteuerung, **dadurch gekennzeichnet, dass** die Robotersteuerung gemäß einem der vorhergehenden Ansprüche ausgebildet ist.

10. Verfahren zum Steuern, insbesondere zum Inbetriebnehmen, eines Roboters (IR) mittels einer Steuerung (RC) nach einem der vorhergehenden Ansprüche 1 bis 8, wobei wahlweise wenigstens eine Sicherheitsfunktion der Robotersteuerung deaktiviert wird.

11. Computerprogrammprodukt mit auf einem maschinenlesbaren Träger gespeicherten Programmcode, der ein Mittel nach einem der vorhergehenden Ansprüche 1 bis 9 bildet oder ein Verfahren nach Anspruch 10 ausführt, wenn er in einem Mittel nach einem der vorhergehenden Ansprüche 1 bis 9 abläuft.

## Claims

1. A control unit (RC) for a robot (IR), having a receiving means (IF) for receiving safety information via a network data connection (B), a safety means (SC) for executing at least one safety function on the basis of at least one item of safety information that has been received, and a deactivating means (MT, SW) for deactivating at least one of these safety functions, **characterised in that** the deactivating means is constructed in such a way that, for deactivating at least one safety function, it comprises a simulation means (MT) for simulating at least one item of safety information which can be received via the network data connection.

2. The control unit according to claim 1, **characterised in that** the deactivating means comprises a selection means (SW) for selecting at least one mode of operation by deactivating a safety function.

3. The control unit according to claim 2, **characterised in that** a mode of operation which can be selected by the selection means comprises an automatic mode of operation or a manual and/or a test mode of operation, in particular a mode of operation with a reduced speed of the robot and/or with a reduced working space.

4. The control unit according to any one of the preceding claims, **characterised in that** an item of safety information is dependent on a state of a safety device, in particular an emergency stop sensor (NA), a space monitoring system and/or a monitoring system of the state of the robot.

5. The control unit according to any one of the preceding claims, **characterised in that** a safety function permits or prevents a state of the robot or a mode of operation of the robot on the basis of at least one item of safety information.

6. The control unit according to any one of the preceding claims, **characterised by** an input means (KCP), in particular a portable input means (KCP), for controlling the robot.

7. The control unit according to claim 6, **characterised in that** the input means comprises a safety device, in particular a consent sensor (ZS).

8. The control unit according to any one of the preceding claims, **characterised in that** at least one safety function cannot be deactivated by the deactivating means.

9. An automation system with a system control unit (SPS), at least one robot control unit (RC) and a network data connection (B) for transmitting safety information to the robot control unit, **characterised in that** the robot control unit is constructed in accordance with any one of the preceding claims.

10. A method of controlling a robot (IR), in particular of starting up operation of a robot (IR), by means of a control unit (RC) in accordance with any one of the preceding claims 1 to 8, wherein at least one safety function of the robot control unit is optionally deactivated.

11. A computer program product comprising a program code which is stored on a machine-readable medium, which program code constitutes a means according to any one of the preceding claims 1 to 9 or which carries out a method according to claim 10 when it is run on a means according to any one of the preceding claims 1 to 9.

## Revendications

1. Commande (RC) pour un robot (IR), avec un moyen de réception (IF) pour la réception d'informations de sécurité par le biais d'une liaison de données de réseau (B), un moyen de sécurité (SC) pour l'exécution d'au moins une fonction de sécurité sur la base d'au moins une information de sécurité reçue, et un moyen de désactivation (MT, SW) pour la désactivation d'au moins une de ces fonctions de sécurité, **caractérisée en ce que** le moyen de désactivation est réalisé de sorte qu'il présente pour la désactivation d'au moins une fonction de sécurité un moyen de simulation (MT) pour la simulation d'au moins une information de sécurité pouvant être reçue par le biais de la liaison de données de réseau.

2. Commande selon la revendication 1, **caractérisée en ce que** le moyen de désactivation présente un moyen de sélection (SW) pour la sélection d'au moins un mode de fonctionnement par désactivation d'une fonction de sécurité.

3. Commande selon la revendication 2, **caractérisée en ce qu'**un mode de fonctionnement sélectionnable par le moyen de sélection comprend un mode automatique ou un mode manuel et/ou d'essai, en particulier un mode avec vitesse de robot réduite et/ou avec espace de travail réduit.

4. Commande selon l'une quelconque des revendications précédentes, **caractérisée en ce qu'**une information de sécurité dépend d'un état d'un dispositif de sécurité, en particulier d'un capteur d'arrêt d'urgence (NA), d'une surveillance d'espace et/ou d'une surveillance d'état de robot.

5. Commande selon l'une quelconque des revendications précédentes, **caractérisée en ce qu'**une fonction de sécurité autorise ou empêche un état de robot ou mode de robot sur la base d'au moins une information de sécurité.

6. Commande selon l'une quelconque des revendications précédentes, **caractérisée par** un moyen de saisie (KCP), en particulier portable, pour la commande du robot.

7. Commande selon la revendication 6, **caractérisée en ce que** le moyen de saisie présente un dispositif de sécurité, en particulier un capteur de validation (ZS).

8. Commande selon l'une quelconque des revendications précédentes, **caractérisée en ce qu'**au moins une fonction de sécurité n'est pas désactivable par le moyen de désactivation.

9. Installation d'automatisation avec une commande d'installation (SPS), au moins une commande de robot (RC) et une liaison de données de réseau (B) pour la transmission d'informations de sécurité à la commande de robot, **caractérisée en ce que** la commande de robot est réalisée selon l'une quelconque des revendications précédentes.

10. Procédé de commande, en particulier de mise en service, d'un robot (IR) au moyen d'une commande (RC) selon l'une quelconque des revendications précédentes 1 à 8, dans lequel au choix au moins une fonction de sécurité de la commande de robot est désactivée.

11. Produit de programme informatique avec un code de programme enregistré sur un support lisible par machine, qui forme un moyen selon l'une quelconque des revendications précédentes 1 à 9 ou exécute un procédé selon la revendication 10, lorsqu'il s'effectue dans un moyen selon l'une quelconque des revendications précédentes 1 à 9.
